# EUROPEAN PATENT APPLICATION

(11) **EP 2 821 951 A1**
(43) Date of publication of application: **07.01.2015**
(21) Application number: 13175149.7
(22) Date of filing: 04.07.2013
(51) Int. Cl.: G06Q 30/02

(54) **Systems and methods for adaptive delivery of content using interactive feedback**

(71) Applicant: Really Epic Dog, Ltd., London WC2A 3BP (GB)
(72) Inventor: Scholes, Wayne G.J., Utah 84116 (US); Butler, Jon F., Utah 84092 (US); Hubbard, David A., Utah 84414 (US)
(74) Representative: Robson, Aidan John

(57) **Abstract**

The invention provides systems and methods of adaptive marketing based on interactive feedback from one or more participants. In particular, a system for adaptive marketing, comprising a participant access device, at least one data management devices, a communication means between the participant access device and the at least one data management device, and one or more sub-platforms for facilitating at least one participant interaction with the system. The one or more sub-platforms may include an Advertising sub-platform, a Redemption sub-platform, an Offer sub-platform, a Social Media sub-platform, and an Education sub-platform. Also included are methods for adapting marketing. The methods include identifying characteristics of a participant, trending the identifying characteristics, and adapting marketing materials based on the trends. The invention provides methods for distributing offers for goods or services including driving viral interactions with an integrated system.

## Description

### FIELD OF THE INVENTION

The invention relates generally to systems and methods for advertising, advertising related activities, and promoting products or services between multiple sources and multiple recipients. In particular this invention relates to providing a participant with an adaptive advertising experience through interactive feedback of the participant.

### BACKGROUND OF THE INVENTION

Generally, many types of information and content, including books, music, movies, video games, advertisements, mobile applications, software programs, databases, and other things are stored and transferred digitally. This information or content is stored and transferred using electronic networks, including public and private networks. The information may be used by an end user for entertainment, education, research, marketing, product placement, and other purposes.

Typically, content is transferred during a single exchange where an end user requests specific content and a content provider transfers a physical or digital copy of the information to the user. For example, an end user may purchase a digital copy of a particular music or movie title from a content provider. The digital content is then transferred, through an electronic network, to the end participant, often at a remote location.

During transactions of the type described, information about the end user may be obtained for various purposes. Typical information that may be gathered would include, name, address, financial data, and history of other transactions with that provider. In some cases, this information may be communicated to a third-party for various purposes, such as advertising and sales. Traditional advertisements are often selected on perceived commonalities of a target audience as a whole.

Recently, in addition to using a personal device to complete these digital transactions, users have begun accessing content providers through stand-alone devices, such as a kiosk, located in commercial, public, or general use areas. A stand-alone device may be used to collect and report information about a user. However, one problem is that the amount of information that may be collected is limited. In particular, known systems rely on input of the user to define the information that can be collected. If a participant chooses not to provide the requested information, then useful information may be excluded from the data set. Another problem is that any information obtained through the transactional history of a user is compiled from a single source (i.e. a particular content provider). Since the behavior of a participant with a particular provider may not be indicative of typical behaviors or interactions in an unrelated context, the value of the compiled information is limited.

Therefore, it would be an improvement in the art to provide a new type of system that acts as a central point or hub for promoting goods or services. It would be a further improvement to provide a system capable of adapting to individual participant characteristics based on the behavior of the participant. Additionally, it would be an improvement to provide a single system capable of utilizing complex data acquired from multiple sources and transactions, which may be unrelated, to identify and/or predict commercial behavior. Another improvement would be methods to influence participant behavior to increase interactions with, and time spent in, the system and, by doing so, optimizing the marketing potential to each participant.

### SUMMARY OF THE INVENTION

The invention is defined the claims to which reference is directed.

The invention includes systems and methods for promoting goods or services, where the promotions are customized or adapted for a particular participant by interactive feedback. The methods include providing incentive for the participant to repeatedly interact with the system. The system is optimized through these repeated interactions, and content may become more customized as the participant interacts with the system. In addition, using the system and methods of the invention, content may be used as currency in other transactions. The system of the invention may include a software platform for carrying out a plurality of data handling and communication functions. In another aspect of the invention, the system may include one or more participant access points including a plurality of information collecting devices. For example, a participant access point might include a visual recognition device. The visual recognition device may be used to gather information about a participant, or to identify the participant directly, and to target promotional items based on characteristics of the participant derived from the device. The participant access point might also include a merchandise scanner for collecting transactional and other information about a participant.

Each participant access point is in communication with one or more data management devices. Additionally, all information gathered from each access point may be aggregated in the one or more data management devices and evaluated. Therefore, a participant may choose any access point and still be recognized by the system. For example, the participant might use the same access point repeatedly. Alternatively, the participant might use a new, previously unused, access point. In either case, the participant will be provided with promotional material based on the information in the one or more databases. Further, no matter how the participant chooses to access the system, valuable information can be learned every interaction. In other examples, the information of multiple participants might be combined and evaluated to provide modified geographical or demographic promotions to selected communities of participants. The invention also includes a plurality of sub-platforms or associated programs for incentivizing repeated participant interaction with the system. These sub-platforms include but are not limited to an Advertising sub-platform, a Redemption sub-platform, a Social Media sub-platform, an Education sub-platform, and an Offer sub-platform. The sub-platforms encourage participant interaction in different ways. Additionally, the sub-platforms may be combined in a plurality of ways as the system adapts to the interactive feedback from participants.

As is apparent in the following description, the invention provides a new system and methods for using complex interactions to adapt marketing to one or more consumers. Promotional material may be customized based on a single participant, multiple participants, a single transaction, multiple transactions, across multiple types of information provided by a plurality of previously unrelated sources. The system of the invention provides the connection and interaction between each source to optimize recognition of patterns and behaviors in consumer populations. The system and methods provide the ability to drive specific behaviors by combining one or more things of value. This is a benefit to advertisers because they can more easily define what is of value to a participant and how to promote it in the most accessible way to achieve commercially valuable sales or adoption. For example, using the system, it might be determined that the best place to sell sporting event tickets is outside the ballet. The system also benefits participants because they are more likely to be presented with reduced cost or free goods and services that are of interest to them. Additionally, as their interests change the system will adapt so that the participant is perpetually seeing promotional material that is relevant to them.

The system of the invention provides a more enjoyable marketing experience for an end user by providing relevant content, at the right time, for that consumer or community. In addition, the system of the invention is useful to retailers, content providers, and advertisers, independently and as a group, by providing a central interface for collecting, interpreting, and applying market information.
One aspect of the invention provides a method for adapting advertising material, the method comprising: identifying characteristics of a participant;
applying a computer algorithm to the identifying characteristics;
selecting advertising material using the computer algorithm;
gathering additional information about a participant;
trending the identifying characteristics and the additional information;
adapting advertising content presented to a participant according to the trending.

Preferably, adapting of advertising content is dependent on the determined at least one facial characteristic. In an embodiment, selecting advertising material using the computer algorithm, may comprise: limiting the advertising content consistent with the identifying characteristics.

In one embodiment of the invention gathering additional information about a participant, comprises: providing at least one of a Redemption sub-platform, an Offer sub-platform, a Social Media sub-platform, an Education sub-platform, and an Advertising sub-platform.

Alternatively or additionally, gathering additional information about a participant may comprises gathering participant information from a plurality of participant access points.

In one embodiment,the step of trending the identifying characteristics and the additional information, comprises: combining in at least one database, a first set of information and one or more other sets of information, where;
the first set of information includes the identifying characteristics; and
the one or more other sets of information includes information provided through at least one of a Redemption sub-platform, an Offer sub-platform, a Social Media sub-platform, an Education sub-platform, and an Advertising sub-platform.

In an embodiment of the invention, adapting advertising content presented to a participant according to the trending, comprises: providing custom advertising to a participant by limiting content based on the first set of information and the one or more other sets of information.

One aspect of the invention provides a method of distributing an offer for goods or services, the method comprising: driving viral interactions with an integrated system;
gathering information about a participant from interactions with a plurality of participant access points; aggregating the information about the participant in at least one database, evaluating the information about the participant in the database; and
modifying an offer for goods or services according to the information;

In a preferred embodiment, driving viral interactions with the system comprises offering at least one incentive to one or more participants. Preferably, offering at least one incentive to a participant comprises: providing free goods or services through one of an Offer Sub-platform, a Redemption Sub-platform, a Social Media sub-platform, an Education sub-platform, and an Advertising Sub-platform. alternatively or additionally offering at least one incentive to a participant may comprises providing reduced cost goods or services through one of an Offer Sub-platform a Redemption Sub-platform, a Social Media sub-platform, an Education sub-platform, and an Advertising Sub-platform.

In an embodiment of the invention, the step of driving viral interactions with a system further comprises: redeeming the at least one incentive through one or more participant access points.

In a preferred embodiment, offering at least one incentive to a participant comprises: providing a reward to a participant, where the reward is contingent on interactions with the system by another participant.

In an embodiment of the invention, gathering information about a participant from interactions with a plurality of participant access points comprises: combining information from a first participant access point with information from another participant access point in at least one database in communication with each of the first participant access point and the another participant access point.

### BRIEF DESCRIPTION OF THE DRAWINGS

Embodiments of the invention will now be described, by way of example only, and with reference to the accompanying drawings, in which:

FIG. 1 is a flow diagram of a system for providing adaptive marketing through interactive feedback in accordance with an embodiment of the present invention;

FIG. 2 is a simplified drawing of a participant access point having a plurality of input and output components in communication with a remote data management device, in accordance with an embodiment of the present invention

FIG.3 is a schematic view of an embodiment of the invention using facial recognition;

FIG.4 is a schematic view of the offer sub-platform of figure 3;

FIG.5 is a schematic view of the advertising sub-platform of figure 3;

FIG.6 is a flow chart showing how the system determines which advertising target tier to use for a given user situation;

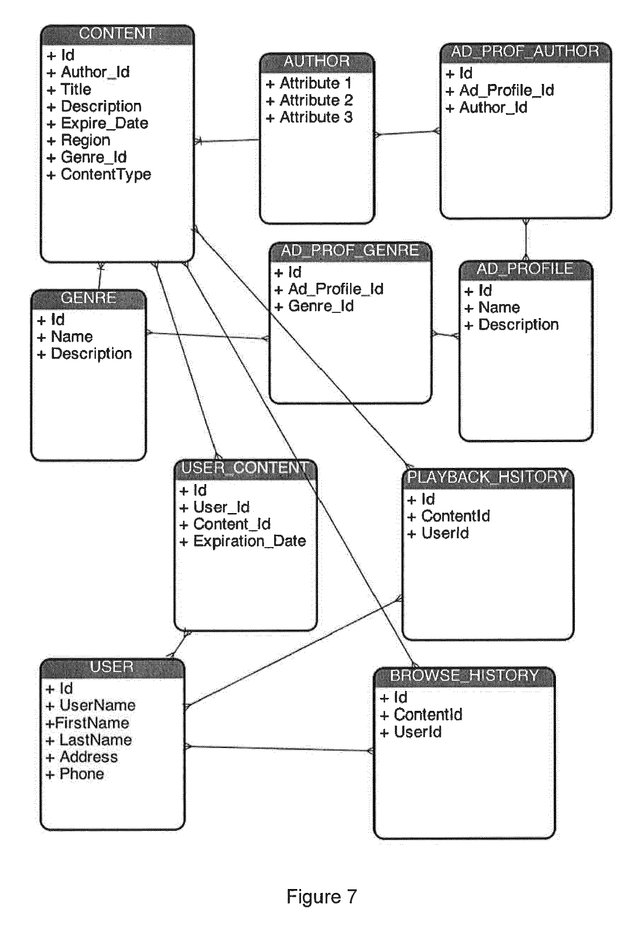

FIG.7 is a ERD showing the relationship between content ad profile database tables, usage profiles and content information;

FIG.8 is a ERD showin the relationship between Age Gender profiles and Advertising profiles; and

FIG.9 is an ERD showing Kiosk history information.

### DETAILED DESCRIPTION OF THE INVENTION

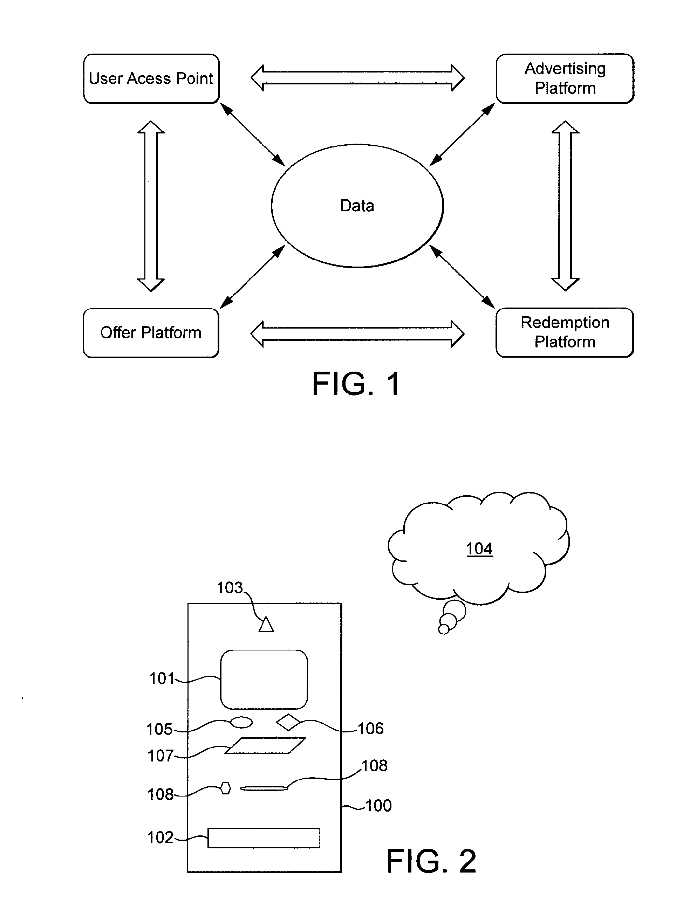

The present invention provides a system (FIG. 1) and methods for combining content, promotional offers, retail partnerships, reward programs, advertising, and data mining to achieve an integrated network that adapts based on participant interaction. The described system and methods of the invention have advantages over currently known systems, methods, and devices. It will be appreciated by those skilled in the art that the embodiments described in this disclosure, while illustrating certain specific and exemplary embodiments, are not intended to limit the scope of the invention or of the applied claims. Those of ordinary skill in the art will also understand that various combinations or modifications of the disclosed embodiments may be made without departing from the scope of the invention.

The system includes one or more participant access points, one or more data management devices, a means of communication between the access points and the data devices, and at least one sub-platform or associated program for participant interaction. In some instances, the one or more participant access points may be integrated with at least one sub-platform. The system may also interface with a plurality of data acquisition devices. The data acquisition devices may be independent, or may be part of ancillary systems. For example, the data acquisition devices may be provided by one or more of the retailer, advertiser, event promoter, and content provider and any other similar party. The data acquisition devices may include devices already in use (*e.g*. a security camera, or facial recognition device) that are in communication with, and provide information to, the one or more data management devices of the system. Thus, the system includes a plurality of information gathering devices and processes. Further, the system includes one or more software platforms and sub-platforms for applying the information in a commercial context. The system acts as a nexus for receiving and disseminating information about individuals and communities.

The participant access point may be any device or process that allows the participant to interact with the system. The participant access point may include personal devices such as an individual's computer, phone, tablet, interactive television, camera, web camera, or other communication or computing device. The participant access point 100 may also be a stand-alone terminal or point-of-service device, for example a kiosk, ATM, or vending machine (FIG. 2). In some cases the participant access point may be through a web based application running on an independent device, for example a webstore. Additionally, the participant access point may include electronic mail, web browsers, instant messaging, text messaging, short message service (sms), Bluetooth, paging, or blogging. The participant access point may include firmware for managing content delivered by the device. In one example, the firmware is used to apply digital rights management (DRM) rules to the distribution of content. In other examples the firmware may be used to label or mark source information. The user access point may include one or more radio frequency identification (RFID) or interactive RFID devices. Further, the participant access point may include a live interaction through an ancillary transaction, as discussed more fully below.

The invention is further described with reference to an example of a participant access device, a Kiosk in figure 2, but other types of participant access points may have some or all of the features described. The participant access point **100** may have a variety of ways for the participant to provide information to the system, including active and passive interactions. For example, a participant may submit information through a keyboard **107,** mouse, touchscreen display **101,** or mobile application. Additionally, participant information may be collected by one or more associated devices capable of collecting data about a participant. For example, a participant access point may have a visual **105** or a voice recognition device **103.** The visual recognition device **105** may be capable of identifying individual participants from a composite. Additionally, the visual recognition device may work in combination with the other components of the system to label a particular individual seen by the device with a unique identifier (*e.g*. their name). The participant access point may optionally have a biometric scanning device. Further, the participant access point may include, or be in communication with, a locational device, for example, a global positioning device (GPS). In some cases, the participant access point may have a device capable of reading or interpreting other media. Examples would include a barcode scanner, a QR reader, a card reader, or an image recognition device **106.** Each associated device would provide the collected information to the system through an electronic network. The participant access point may also include one or more means for distributing content **108,** for example, a USB port, a mini USB port, an HDMI port, a CD/DVD repository or burner, a Bluetooth device, and other means for transferring data.

The system of the invention may optionally include a data acquisition device. In an example of the invention, the data acquisition device is a camera having image recognition software (*e.g*. a security camera) located in a retail location (the "store"). The data acquisition device may be used to monitor the actions of a consumer as they move through the store. For example, the camera may capture an image of a consumer browsing a particular magazine in a magazine display. This information may be communicated to the system of the invention by any of the means discussed in this application or known in the art. For purposes of this example, assume that the consumer chose not to purchase the magazine. However, the system may indicate that the consumer should be presented with a coupon or discount for that magazine at the register or another participant access point. This provides the advertiser a second opportunity to acquire a customer. It also provides valuable information about the participant for the databases of the system. For example, if the consumer takes advantage of the coupon, it might indicate something about the price point for that product. It may also inform the retailer about the placement of products at the location, among other things.

The system of the invention also includes one or more data management devices or databases **102, 104.** The data management device facilitates the exchange and tracking of information. The data management device may be for storage only, for data manipulation only, or a combination of storage and data manipulation. Examples of a data management device would be a server and other devices used for data handling. A database may also include a web based data repository. The database may reside at a static location or might be associated with a mobile device. A participant access point may optionally include at least one integrated database **102.** Additionally, the system may optionally include a remote database **104.** In some embodiments, the remote database **104** is a plurality of data management devices in communication with one another. The one or more data management devices may be in communication over a peer-to peer network, for example. The plurality of data management devices may separate particular data handling functions between the devices. Additionally, the plurality of data management devices may work in combination to optimize system performance.

A participant access point **100,** including an integrated database **102,** may have a means for communication with the remote database **104.** The databases **102, 104** may communicate over an electronic network, through a wireless connection, via Bluetooth, a peer to peer network, or any other means to transmit data between devices. The communication between databases **102, 104** may be continuous, periodic, intermittent, or on-demand. Further, the databases **102, 104** may be accessible to multiple participants simultaneously. In other embodiments, the participant access point **100** may be independently operated, without connection to other participant access points. The types of information that may be submitted to the system include, but are not limited to, demographic information, contact information, locational information, participant preferences, interaction information, transactional information (including purchases, redemptions, and offers accepted), time and date information, financial information, and may include information about past behavior, future behavior (*e.g*. events yet to happen). The system and methods of the invention may use predictive algorithms to propel future behavior.

(FIG. 1) The system optionally has a plurality of sub-platforms or associated pathways. The plurality of sub-platforms may also include integrated data management devices and firmware. A sub-platform, as used in this application, facilitates participant interaction with the system. The sub-platforms may include, among others, one or more of an Offer sub-platform, a Redemption sub-platform, and an Advertising sub-platform, and a Social Media sub-platform, individually or in any combination. The example sub-platforms included in this description are examples only, and not intended to limit the number of sub-platforms of the system of the invention. In one example, the system is made up of one or more participant access points, one or more data management devices, and a single sub-platform (*e.g*. an advertising sub-platform). In another example, the system is made up of one or more participant access points, one or more data management devices, and each of the Offer sub-platform, Redemption sub-platform, Social Media sub-platform, and Advertising sub-platform. In other examples, the system includes one or more participant access points, one or more data management devices, and a plurality of sub-platforms. If there are a plurality of sub-platforms in the system, they may be substantially similar sub-platforms (*e.g*. a pair of offer sub-platforms) or they may be substantially different sub-platforms (*e.g*. an offer sub-platform and a redemption sub-platform) or any combination of various sub-platforms. Each of the sub-platforms may interact with each of the other sub-platforms to define a multi-party, multipurpose system for customizable marketing and content delivery.

An Advertising sub-platform according to the present invention means and includes devices and processes for the participant to be exposed to advertising, marketing, or branding content that drives the participant to interact with the system. In this application, "advertising" and "marketing" are used interchangeably, and are used in a broad manner to include traditional advertising, as well as anything used to expose a product, service, brand, trademark or service mark to the public. In addition, the terms "advertising" and "marketing" mean and include materials used to educate or facilitate consumer understanding of a product, service, brand, trademark or service mark to the public. An Advertising sub-platform might include an initial advertisement, for example, a targeted banner ad displayed on a kiosk screen, where the banner has been selectively placed based on information analyzed from the database of the kiosk. Such an initial ad may be designed to create interest in the kiosk, so that nearby consumers might become participants in the system. In another example, the Advertising sub-platform might include a general initial advertisement at a retail or event location that informs consumers about a webstore of the system. For instance, the ad might direct the user to the webstore to obtain tickets to future events or to purchase memorabilia from the advertised event. The Advertising sub-platform might also include one or more mobile applications ("app(s)") that initially notify a consumer about particular brand promotions, for example. The initial ad might be from a marketing strategy directed to a particular demographic, or it might be the result of a pre-designed general content rotation.

Presumably, a consumer will make a choice to engage with at least one of the advertisements and become a participant in the system, through one of the plurality of participant access points (*e.g*. kiosk, webstore, app, etc.). The system can then gather additional information about the participant, for instance, through visual recognition, credit card data, loyalty card, points payment, or preference inputs. The information obtained through the Advertising sub-platform (shopping or event behavior) and the information obtained through the participant access point can be combined in one of the plurality of databases. In particular, the databases may aggregate other information generated or tracked before. The data is then analyzed, using a computer algorithm, to determine potential products or services of value to that participant. As a result of the analysis, the parameters of the Advertising sub-platform are modified or adapted, to provide custom advertisements, offers, and incentives to that participant in the future. In addition, data from multiple participants may be combined to determine appropriate cross-promotional activities. For example, an analysis of available participant data might reveal that a large proportion of participants who bought trucks also bought brand name jeans. Using the information obtained through the system a truck retailer might choose to do a cross-promotion with the brand name jeans.

The Advertising sub-platform can be used to promote goods and services. For example, a participant may approach a participant access point having a visual recognition device. In an embodiment, the participant access point may be a vending machine. The visual recognition device may provide information to one or more databases including, for example, the how the participant is dressed (*e.g*. shorts and a tank top). This information may be combined with other information available in the one or more databases, for example, that it is a Saturday, in California, and it is eighty degrees outside. Using all of the information in the system, the participant might be advertised sunscreen of one or more brands. Further, the participant may be able to purchase the sunscreen at the participant access point, in this example, a vending machine. Information about whether or not the participant performs the sunscreen transaction is aggregated with the other information in the one or more databases. In another embodiment, a participant may conduct an ancillary purchase (*e.g*. new shoes) at a retail location associated with the system. The receipt may include a coupon for shoe polish. Additionally, the receipt may include a coupon or advertisement for shoe shine services. Continuing with the example, using the shoe shine services may result in the accumulation of loyalty rewards or points. The loyalty points may be redeemed through the system for other products or services, such as athletic shoes, airline tickets, and contest entry, for example.

Another non-limiting example of the Advertising sub-platform may be described as a kiosk located in a mall may display a bright multicolor banner ad, of store locations in the mall, which gets the attention of a consumer walking by it. The consumer may choose to approach the kiosk, where a visual recognition device gathers information about the consumer, for example, age and gender. This information may be used to present available content on the kiosk that is typically of value to a consumer having similar characteristics. For example, a particular store, typical for a participant with similar characteristics (*e.g*. women's shoes), may be highlighted with information about current promotions. In another example, the kiosk may display music or video content available for distribution that is appropriate to someone having the identified characteristics of the consumer (*e.g*. big band music). If the consumer makes a selection on the kiosk, this information is added to that already in the databases and the participant's profile is again modified to include the new information. This process may repeat with each interaction with the system.

In another example of the Advertising sub-platform, a participant may be sub-consciously incentivized to interact with the system. A participant may approach a participant access point, a stand-alone terminal for example, having a visual recognition device. The visual recognition device might identify the participant as a thirteen year-old girl. Using this information, the system might trigger a public service announcement to the effect that the next person to view a specific ad using the access point would receive a reward, and the reward may be targeted to a thirteen year-old girl. In another example, the a thirteen year-old girl seen by the visual recognition device may be labeled as having the name "Jane Doe," based on other content in the one or more databases. Using this information, the system might trigger the stand-alone terminal, having integrated speakers, to state "Hello Jane Doe, are you interested in offer Y today?" In each case the participant is incentivized to interact with the system. In still further embodiments, a group of individuals may approach a participant access point having a visual recognition device. Using the system of the invention, applying one or more computer algorithms, the group may be separately identified as individual participants with accompanying preferences. The user access point may then display a series of customized ads targeted to each individual member of the group or the group as a whole.

The system of the invention may optionally include a Redemption sub-platform. A Redemption sub-platform according to the present invention means and includes devices and processes for the participant to utilize rewards that drive the participant to interact with the system. A reward could include anything of perceived value to a consumer, such as merchandise, coupons, gifts, bonus points, reward points, virtual or actual money, digital content, discounts, credits, services, and knowledge or information (*e.g*. contest clues, news events, academic publications). A redemption sub-platform of the present invention might be initiated with an ancillary purchase of products or services. The ancillary purchase might provide a reward obtained through interaction with the system. For example, a department store might provide a reward (*e.g*. a discount coupon) based on certain purchases, where the reward is printed at an in-store kiosk. Additionally, an event promoter might provide free digital downloads (*e.g*. music) through a system webstore, with the purchase of tickets to the event or upon entry of a code given out at the event.

The Redemption sub-platform may also be initiated through participant access points of the system itself. For example, a participant may access a system webstore to purchase digital video content. Based on the information gathered and assessed in the system databases, the participant may be offered additional, related video content at a discount. As the participant makes a selection from the discounted related content, the information is combined with the other participant information. Continuing with the example, the next time the participant makes a retail purchase at an electronic store associated with the system, he may be presented with a reward for digital video content based on the preferences derived from his other interactions with the system.

Although the reward for the Redemption sub-platform may be the result of a purchase, it may also result from promotional activity. For example, a new club may promote its grand opening by texting a free music download and the location of the club to participants of the network, within a defined geographic area. As participants interact with the system to download the reward, they will be presented with customized content based on their current and previous interactions. In another example, a motorcycle retailer may provide several stand-alone kiosks at a raceway. Participants that interact with the kiosk may be presented with entry into a motorcycle giveaway. The more the participant interacts with the kiosk the more entries they are afforded. Thus, the Redemption sub-platform facilitates information exchange in the system. The reward may be distributed to the participant using any known means, for example, a code on a receipt or merchandise, a physical coupon, an e-mail, text, sms, web page, or mobile app.

With continued reference to Figure 1, an Offer sub-platform may also be included in the system of the invention. Similar to the other sub-platforms previously discussed, the offer sub-platform according to the present invention means and includes devices and processes for one participant to recruit other participants to interact with the system, generating a viral marketing dynamic. Additionally, the Offer sub-platform means and includes devices and processes for using content as a currency. A participant may be incentivized, optionally through the redemption sub-platform, to adopt particular marketing media on personal devices. For example, a participant might be offered discounted streaming content in exchange for adopting certain ads to be run during the streaming presentation (an "adoption offer"). The Offer sub-platform may also be used to motivate specific participant behavior. For example, the offer might be conditional on a participant engaging in particular behavior. The participant may be provided an offer that if the participant listens to three specified artists, then a particular reward will be given, for example.

In addition, a participant may be incentivized, optionally through the Redemption sub-platform, to deploy particular marketing media to other participants and non-participants (a "deployment offer"). For example, a participant might be offered free meal coupons for a restaurant in exchange for posting a promotional advertisement to a social network page. Another example includes, a participant being offered a free mobile application in exchange for providing the developer, through the system, with additional contacts, who may or may not be existing participants in the system, which would find the applications of the developer of value (creating a new marketing network for the developer). In some cases, an offer may be contingent upon friends/interested parties of the participant accepting the promotion forwarded by the participant. Alternatively, the offer may be accepted merely by transmitting, (via any know means such as social media, text, e-mail, blogging, phone, etc.) the promotional material associated with the offer.

In an embodiment of the invention the system may be a means for using content as a currency, or content in exchange for goods or services. For example, a content provider (*e.g*. artist, studio, licensor, and others) may grant permission to use particular content to an advertiser in exchange for an advertising campaign for some of the content provider's content. Another example includes a participant receiving a free download in exchange for posting an advertisement on a social media site.

In other examples, the system may include a Social Media sub-platform. The Social Media sub-platform according to the present invention means and includes devices and processes for the participant to utilize a variety of social and professional contacts and online associations to drive participant interactions with the system. In particular, the Social Media sub-platform may be useful for: identifying typical or standard behavior for any participant, including other members of a participant's social media network in an activity, event, or other promotion of good or services. The Social Media sub-platform may be used to differentiate between "standard" transactions and "non-standard" transactions. An example of a "standard" transaction would be where a participant buys tickets to a performance of a band he has repeatedly blogged about. An example of a "non-standard" transaction would be a transaction conducted for the benefit of others (*e.g*. a gift). It would be in the interest of the participant to exclude the "non-standard" transaction from future data sets designed to promote goods and services relevant to the participant. A participant may optionally self-identify a "non-standard" transaction, such as transaction for the benefit of others. Also, the non-standard transaction might be determined by applying a computer algorithm.

The Social Media sub-platform may be used to identify other potentially interested parties regarding participant transactions or other common interests. The Social Media sub-platform may be used to communicate with similar or connected communities simultaneously or sequentially. The Social Media sub-platform may also be used to build social networks, for example, by putting participants with common behavior in communication with each other. In addition, the Social Media platform might facilitate participation in contests using the system. For example, a participant who uses the system to vote for a contestant on a music performance show might receive a free download of a song by that contestant.

The following describes a non-limiting example using a Social Media sub-platform. A participant, a twenty year-old male, may purchase opera tickets on behalf of his mother using a participant access point, for example. The participant may indicate during the transaction that this is a gift purchase. Alternatively, the system might identify it as a non-standard transaction after applying a computer algorithm. Once the purchase has been evaluated, one or more of the platforms may be used to select other participants to receive related offers or notifications. For instance, the participant's social media activities and contacts might be used to identify that the tickets are for an event (*e.g*. a birthday) and subsequently send promotional offers to the mother for her birthday. Additionally, the Social Media sub-platform might identify siblings that would also be interested in the birthday transactions. In particular, it might send a reminder to the siblings about the upcoming birthday. Further, using one or more of the platforms, the siblings might receive additional offers for that date (*e.g*. restaurant coupons, dinner reservation scheduling, car service, warranties, or others - that might complement the original purchase of ballet tickets). Thus, one non-standard transaction with the Social Media sub-platform may provide a useful service (*e.g*. reminder notices) or be used to encourage additional transactions with the same or other participants.

Another non-limiting example of the Social Media sub-platform of the invention includes providing an environment where parties having common interests may become aware of, communicate, and interact with each other. For example, a content provider, such as a musician, an artist, a teacher or professor, a videographer, a photographer, a technical writer, a computer programmer, an applications developer, a manufacturer of goods, an advertiser, and any other person who may provide content to the platform, may be interested in communicating with other participants. A musician may be interested in finding band members, for example. An author may be interested in finding publishers. Another example is, a good manufacturer that may be interested in advertising a particular good. Using the Social Media sub-platform, parties having common interests or goals may be identified by applying one or more computer algorithms to the information in the one or more databases. Additionally, performing a search using the system yields a customized set of results because of the specialized ability of the system to combine and evaluate information.

The system may optionally include an Educational sub-platform. The Educational sub-platform means and includes devices and processes for the participant to utilize a variety of knowledge sources to drive participant interactions with the system. For example, using the system, a participant (*e.g*. a student) might read an article on spiders to prepare a report. The Educational sub-platform, using the one or more databases of the system, may provide the participant with other articles relating to spiders. Further, utilizing one or more of the other platforms, the participant might be provided with information regarding pet stores having spiders, or upcoming trade shows about spiders in his area.

The system of the present invention may include each of the sub-platforms described herein. It may also include other sub-platforms for facilitating interaction with the system. The system of the invention provides a unified interface for complex commercial transactions of the participants. Regardless of the nature of the product or service, it may be promoted through a single integrated network. Additionally, the system might be used for notifications and reminders. Because of the interactive nature of the system, participant behavior can be accurately monitored across multiple types of environments and transactions. Additionally, because of the adaptive nature of the system participant behavior may be more easily influenced. Each interaction of a participant with the system of the invention perpetuates the cycle of information gathering and analysis followed by adapting marketing and promotional activities based on the information provided. Therefore, the system may be used by participants as a "lifestyle service" such that, a participant uses the system to manage a plurality of transactions in everyday life including, for example, notifications to pick up dry cleaning, automatic text updates about your favorite entertainer, access to your music library while on an international vacation, sending your friends a great promotion from your favorite retail store, and many more.

The invention also includes methods and processes for adaptive marketing using interactive feedback. For example, the invention includes methods of data mining (*i.e*. collecting and analyzing information) for providing guidance to interested parties about patterns, habits, or preferences of one or more individuals. The interested parties include advertisers, content providers, retailers, and any other entity interested in monitoring, understanding, educating, or influencing behavior of one or more individuals. The guidance provided may be to enable targeted or customized marketing to particular population(s). Other methods of the invention included processes for adapting advertising material, products, services, events, and content based on interactive feedback. The methods include providing incentive for participants to repeatedly interact with a system for adaptive marketing. The methods may include guiding a participant through a series of sub-platforms or associated programs. Guiding a participant through a series of sub-platforms may include providing a participant access point for a plurality of activities, such as, purchases, social networking, account updating, content delivery, and other desired activities. Further, it may include combining information collected through the various access points and selecting content for a participant based on the combined information. The invention also includes methods of distributing offers for goods and/or services.

A non-limiting example of a method for distributing an offer for goods and services is described hereafter, for illustration purposes only. In an embodiment of the method a participant may be directed to a participant access point through the advertising sub-platform of the system. For example, the participant may respond to an advertisement for music content which is then purchased through the webstore. Information is gathered about the participant while he is using the webstore. The information might include demographic information, geographic information, the participant's music preferences, and other data that would be of value to one promoting goods or services. While interacting with the webstore of the system the participant might be provided with a reward. One example of a reward would be a discount coupon. The participant might redeem the reward at a nearby retail outlet. Redeeming the reward might enable the participant to purchase merchandise from the store at a reduced cost. In addition, the merchandise might provide other promotional material for redemption at an in-store kiosk or other near-by retail location. In some cases, the promotional material may be a code printed on a receipt. The promotional material might also be included on the packaging of the merchandise, for example in a bar code or QR code.

According to the methods of the invention, the participant may present the promotional material at a participant access point, such as an in-store kiosk, vending machine, or touch point. The kiosk may facilitate gathering additional information about the participant. For instance, a component of the kiosk might scan the merchandise or receipt code and transfer information regarding the ancillary purchase to a data management device in the kiosk. Additionally, the kiosk might include a visual recognition component that gathers additional information about the participant using the kiosk. The information from the webstore, the retail transaction, and the kiosk devices may be aggregated, for example, in a remote database. In addition, the database may provide a means for evaluating the participant data, a computer algorithm, for example. Using the information in the database, the kiosk might display an offer for free concert tickets to the participant's favorite band if the participant provides information about five other people who are also interested in the band. Using the kiosk the participant might forward promotional material for the webstore to five additional consumers. The advertising presented to the additional participants upon their interaction with the system may be modified based on information gathered from the initial participant. In addition, each of the additional participants information is collected and used to adapt the promotional material that each is presented with, thereby driving viral interactions with the system.

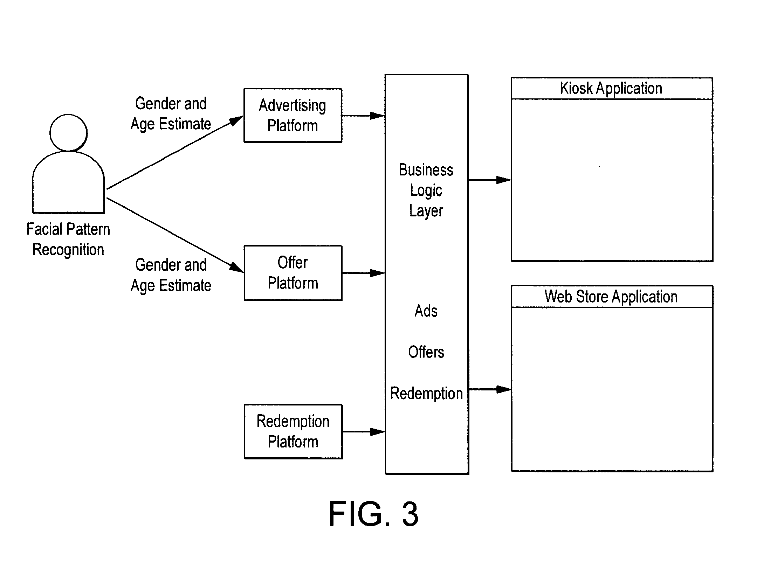

Figures 3 to 5 show a further embodiment of the invention which includes the advertising, offer and redemption sub-platforms described above. The user interface is via a kiosk or webstore application as described above. These applications communicate with the sub-platforms via a business logic layer. Facial recognition is used to determine the content that is presented to a user, via the visual recognition device described above. The sophistication of the facial recognition software used with the visual recognition device may depend of the nature of the interface that is used. The following example is particularly suited to the kiosk application although may also be used with the web store application.

The visual recognition device comprises a digital camera or other image acquisition device for acquiring a digital still of video image of a user, for example in a kiosk. A Facial Recognition Engine (FPRE) operates on the acquired image or images. The FRPE is a software application that analyzes digital images of a person's face and utilizes a pattern algorithm to generate scores relating to the likelihood of the gender and age of the face depicted in the image. First, the engine analyzes the image and creates a vector based matrix of the image. The algorithm completes a linear discriminant analysis of the vector based matrix and calculates ratios based on the matrix components to estimate gender and age. The engine then runs an elastic bunch graph matching algorithm that examines the nodes positioned at the fiducial points of the face such as noses and cross points. Each node is given a set of 40 wavelet coefficients at different orientations (phase and amplitude). Distances between nodes are calculated and an age and gender score is given. The engine then takes the average gender score of the two algorithms and the average age score of the two algorithms. The average score is then reported to the requesting platform which may be, in this example, the offer platform or the advertising platform. The scores are represented by a confidence factor. For example, a gender score of 0.63 indicates that the engine is 63% confident that the subject of the image is female. A gender score of -0.71 indicates that the engine is 71% confident that the subject of the image is male. The age score is returned to the calling application as an array. For example (25,0.62) indicates that the engine is 62% confident that the subject of the image is 25 years of age. Age and gender are two characteristics of the face that the facial pattern recognition engine estimates. However, other characteristics could be estimated.

The Offer Platform Engine (OPE) is used to generate promotional offers and/or coupons in a retail environment. The offer platform also allows for the translation of financial currency to points for points based purchases in a retail environment such as points generated by rewards programs or gaming play for points environments. The Offer Platform Engine takes an optional FPRE (Facial Pattern Recognition Engine) input to determine which offers should be displayed to the end user. The FPRE input is utilized in a kiosk application environment where a camera is placed inside the kiosk and the FPRE is utilized to estimate the age and gender of the individual in front of the kiosk. The FPRE may be used in additional applications.

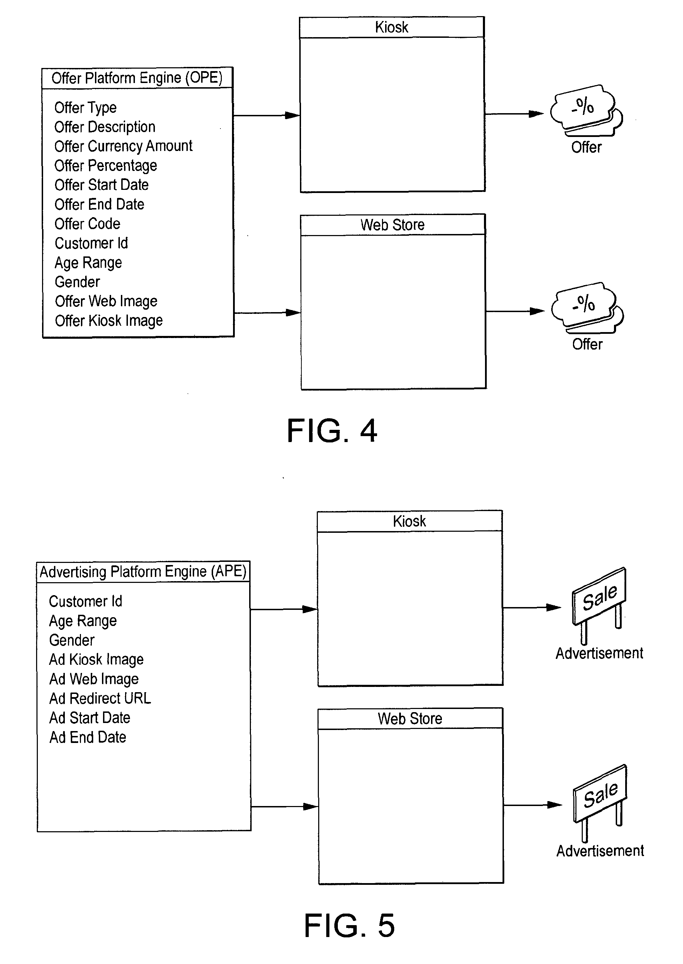

The Offer Platform Engine is shown schematically in figure 4. The Offer Platform Engine (OPE) manages offers consisting of an offer type (fixed currency, percent, or re-direct), a customer to which the offer is associated, valid offer date information, an offer code which can be entered at the kiosk or web store, and images pertaining to an offer including any printable coupon images. These images may be stored in forms that are suitable for distribution to the kiosk and the web store applications. The user facing applications such as the Kiosk application or the Web Store application will request an offer for display from the OPE. The OPE will analyze the request to determine whether facial recognition data is required. If required, the OPE will send a request to the FRPE for age and gender information. Once the information is received, the OPE will serve an offer to the requesting application that meets the age/gender criteria, is within the date range of the current date, and is suitable for the requesting customer. If age/gender information is not required, a coupon will be served to the requesting application randomly based only on the customer id and date range.

The offer will be one of three types: Fixed Currency, Percentage or Redirect.

A fixed currency offer will give the end user a fixed amount discount such as 2 pounds. A percentage discount will take a discount off of the total price prior to taxes/VAT (such as 15% discount). A redirect offer will redirect the user to a different website URL where the user can either print a physical paper coupon or complete an offer on the redirect URL web page.

Once the offer is returned to the requesting application, the offer details will be displayed in the user facing application where the end user may select whether or not to use the offer during their purchase.

The OPE is structured as a web service. The messages sent between the requesting application and the OPE can be made via SOAP or JSON depending on the preference of the requesting application. The message is returned as XML if requested via SOAP or as a JSON object if requested via JSON.

The Advertising Platform Engine (APE) provides a means for advertisers to directly target specific demographics based on software usage patterns and/or facial pattern recognition.

The user facing applications such as the Kiosk application or the Web Store application will request an ad for display from the APE. The APE will analyze the request to determine whether facial recognition data is required. If required, the APE will send a request to the FRPE for age and gender information. Once the information is received, the APE will serve an advertisement to the requesting application that meets the age/gender criteria, is within the date range of the current date, and is suitable for the requesting customer. If age/gender information is not required, an advertisement will be served to the requesting application based on kiosk and/or web usage information rather than age/gender information from FPRE. If the end user completing a purchase is logged in and has previously purchased content, the previous purchase patterns will be analyzed by the APE to determine the most relevant advertising to display. If the user is not logged in, the APE will analyze the aggregate purchase history from the kiosk or web store that is requesting the ad to determine the most relevant ad to return to the requesting application.

The APE is structured as a web service. The messages sent between the requesting application and the APE can be made via SOAP or JSON depending on the preference of the requesting application. The message is returned as XML if requested via SOAP or as a JSON object if requested via JSON.

The Redemption Platform Engine (RPE) provides the mechanism for applying the discounts or coupons generated by the OPE to an order at time of checkout. The Redemption Platform Engine is utilized in both the Kiosk Application and the Web Store Application.

In client facing applications, for example Web Store and Kiosk, the user will select items for purchase and/or redemption. Once the user is ready to complete the purchase, they will review the items to be purchased and apply any offer code from the OPE. At the time of checkout, the redemption system is used to validate the offers and redemptions.

The RPE will validate the following items against an OPE object:
(i) The purchase falls within a valid date range for the offer;
(ii) The purchase is valid for the content provider of the content being purchased or redeemed;
(iii) The purchase is being made in the correct currency

The RPE will also validate the currency conversion to points in the case that the purchase is being made on a point redemption system such as a frequent traveler points based website or a retail game system where users earn points by playing games and then redeem them for digital content using the customr application. In these instances, the RPE will validate the number of points available in the end user's account and manage the point redemption to ensure that the points used are debited from the end user account and the currency translation is reflected in the accounting system.

The end-user facing applications make a request to the RPE to validate the redemption. If all validation is successful, the RPE returns a success code and the end user application is permitted to complete the check out process. In the event that validation fails for any reason, a validation error code is returned to the requesting application via SOAP or JSON and the checkout process is halted until the error can be resolved.

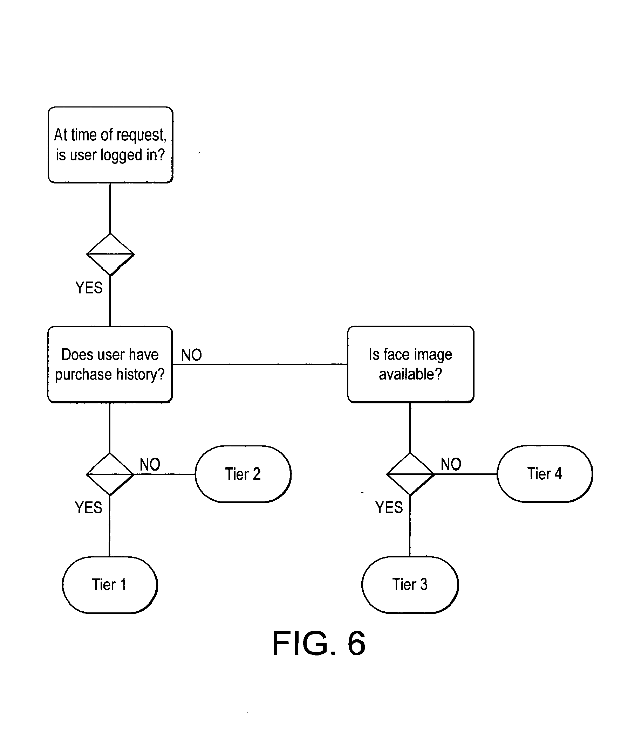

The system described uses a tiered algorithm collection to determine which ads are most relevant to display to the current user. The following description explains how the tiers are determined and the algorithms used at each tier. Referring to figure 6, prior to placing a request for an advertisement or an offer from the OPE or APE, the application will process the algorithm shown in figure 6 to determine which advert targeting tier will be used to determine the most relevant ad and/or offer. Initially the system determine whether the use is logged in at the time they make the request. If they are, the system determines whether that user has a purchase history and a browsing history. If they do, the tier 1 algorithm described below is applied. If not, that is they have a browsing history but no purchase history, the tier 2 algorithm is used.

If there is no browing or purchase history, and no user information is available, it may be because the user is not logged in at a kiosk or web store or that they are a first time user who has not yet created a user account. Tier 3 is then the preferred determination. Tier 3 can be used if a facial image is available. However, if the system does not have enough information to select an advertisement or an offer at Tier 1, 2 or 3 it will resort to a Tier 4 determination. This tier still supplies some level of content preference aggregation.

Tier 1 is used when an existing user has a purchase history and a browsing history. Tier 1 determination allows the system t0 acts as a central point or hub for promoting goods and/or services. It aggregates end-user usage behavior by tracking browsing, purchase, and usage history and serving advertisements and offers for goods and services based on the aggregated usage and browsing history patterns.

Whenever a logged in user browses to a content page in the Kiosk application or the Web Store application, a record is made in the Browse_History table on an MS SQL Server. Every time a user previews a file that has not yet been purchased, or plays a file that has been previously purchased, a record is created in the Playback_History table in the MS SQL Server database. Each time a user purchases content, a record is created in the User_Content table in the MS SQL Server database. Each of these records associate usage behavior with an individual user.

The usage behavior is in-turn associated with an advertising profile. Advertising profiles are created in the Ad_Profile database table. The profiles are associated to content by creating entries in the Ad_Prof_Genre database table and the Ad_Prof_Author database table. These tables tie content within certain genres and certain authors to the advertising profiles.

The OPE and APE layers then use a combination of the user browsing history, usage, and purchase history information and the content advertising profile information to serve the most relevant ad to the user. This is determined by utilizing an algorithm that gives the user a content preference score that is weighted 50% to the purchase history, 30% to the playback history, and 20% to the browsing history. Once the user content preference score is generated, it will be compared to the advertising profile score that is generated from the information in the ad_profile content profiles. The ad with the closest score match to the user will be returned to the user.

The entity relationship (ERD) diagram of firure 7 shows the relationship between content ad profile database tables, the usage profiles, and the content information.

If purchase history does not exist for a user, the next preferred determination is Tier 2. Tier 2 determination is provided if a logged in user has browsing and/or playback history but has not completed any purchases.

In this case, the OPE and APE layers use a combination of the user browsing history, and usage history (based on preview only) along with the content advertising profile information to serve the most relevant ad to the user. This is determined by utilizing an algorithm that gives the user a content preference score that is weighted 65% to the playback history, and 35% to the browsing history. Once the user content preference score is generated, it will be compared to the advertising profile score that is generated from the information in the ad_profile content profiles. The ad with the closest score match to the user will be returned to the user.

If user information is not available (the user is not logged in at a kiosk or web store or this is a first time user who has not yet created a user account), Tier 3 determination becomes the preference. Tier 3 determination can be used if a facial image is available. The most typical case for Tier 3 is when a user is standing in front of a retail kiosk equipped with a camera that has generated a digital image of their face. The image is analyzed and passed to the facial recognition engine which then analyzes the image and returns an age and gender profile to the requesting application.

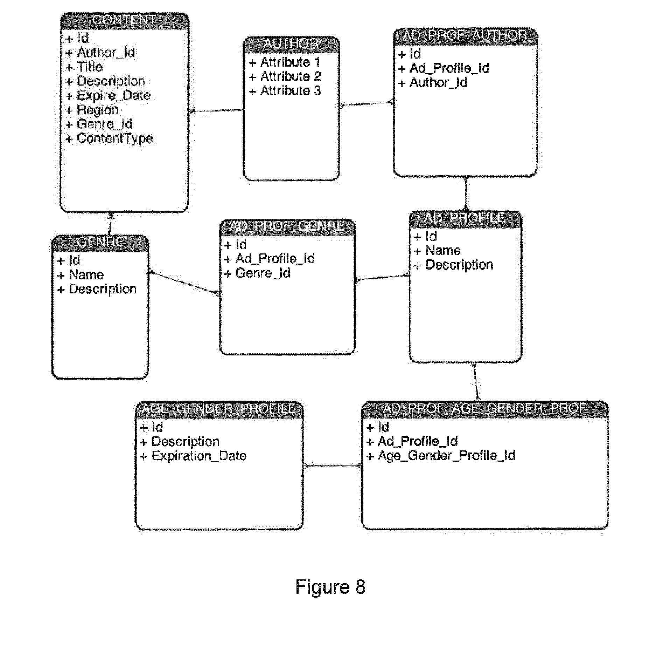

The operation of the FPRE is described above. The Age Gender profiles generated by the FRPE are stored in an Age_Gender_Profile database table. These profiles are related to the Adverstising profiles through the Ad_Prof_Age_Gender_Prof database table. The ERD diagram depicting this relationship is shown in figure 8.

When a requesting application (Kiosk or Web Store) requests a Tier 3 Advertisement or Offer, the OPE or EPE will send a request to the FPRE for an Age Gender Profile. Once this request is returned, an ad will be pulled at random that matches the Age Gender profile by performing a Ad_Profile lookup on the Ad_Prof_Age_Gender_Prof database table. The matching ad and/or offers will be displayed to the end user.

If the system does not have enough information to make an ad or offer determination at a Tier 1, 2, or 3 level, it will resort to a Tier 4 determination. Even the Tier 4 determination supplies some level of content preference aggregation, thus overcoming the problem from single source transactional history. Because user and facial recognition determination is not available, Tier 4 determinations are made based on aggregating purchase history information over all users for the history of the requesting kiosk or web store application.

Each instance of the Kiosk software is assigned a Unique Kiosk Id that is recorded in the Kiosk database table. Each instance of the Web Store is also assigned a unique Kiosk Id that is stored in the Kiosk database table. Any time a request is made to OPE or APE for an offer or advertisement, the request is sent along with the kiosk ID of the requesting application.

If the OPE or APE receive a request for a Tier 4 determination, they will generate an ad score by analyzing all past purchases on the specified kiosk. They do this by pulling the information from the Kiosk_Purchase database table, the Kiosk_Browsing_History database table, and the KioskPreview database table. Every time an item is browsed, previewed, or purchased, the Kiosk and Web Store applications store a record of it in the corresponding database table (Kiosk_Purchase, KioskPreview, Kiosk_Browsing_History).

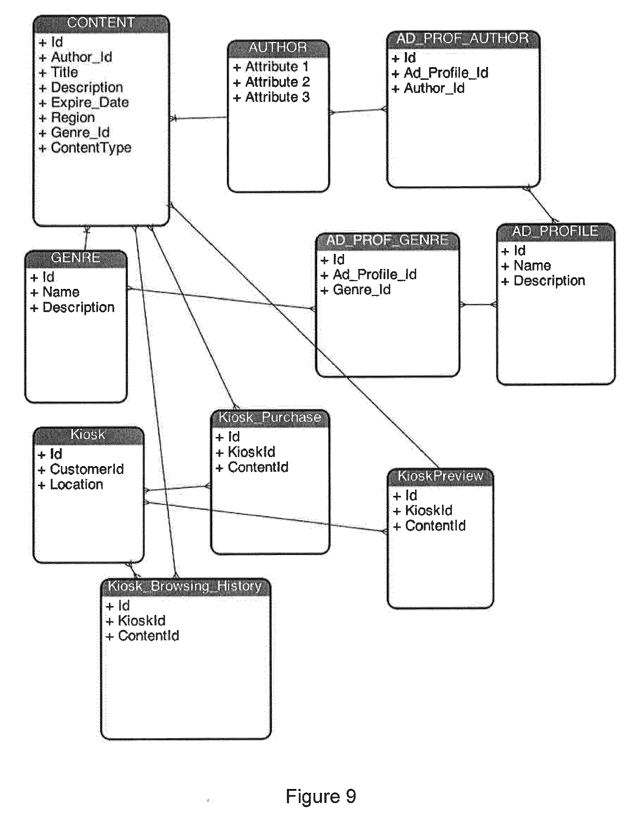

The OPE and/or APE application will then generate a score given on the prior usage history of the kiosk. The score will be weighted 50% toward past purchases associated with the specified Kioskld, 30% to past previews, and 20% to browsing history. This score will then be compared to the advertising profile score that is generated from the information in the ad_profile content profiles. The ad with the closest score match to the kiosk id history will be returned to the requesting application to be displayed to the user. The ERD diagram detailing the Kiosk history information is shown in figure 9.

While the present invention has been described herein with respect to certain preferred embodiments, those of ordinary skill in the art will recognize that the invention is not so limited. Rather, many additions, deletions, and modifications may be made without departing from the scope of the invention as hereinafter claimed. In addition, features of one embodiment may be combined with features of another embodiment while still being within the scope of the invention as contemplated by the inventors.

## Claims

1. A system for adaptive marketing, comprising:
a participant access device, where the participant access device comprises one or more input components;
at least one data management device, where the data management device accepts information from a plurality of sources;
a communication means between the participant access device and the at least one remote data management device; and
a sub-platform for facilitating at least one participant interaction with the system.

2. The system of claim 1, wherein the one or more input components of the participant access device comprises at least one of a touchscreen display device, a visual recognition device, a voice recognition device, and a scanning device.

3. The system of claim 1 or 2, wherein the data management comprises a web based data repository.

4. The system of claim 1, 2 or 3, wherein the plurality of sources from which the data management device accepts information comprises at least one of a telephone, a computer, a television, a stand-alone kiosk, a retail terminal, a mobile application, a peer-to-peer network, and a web page.

5. The system according to any of claims 1 to 4, wherein the sub-platform for facilitating at least one participant interaction comprises a plurality of sub-platforms.

6. The system of any of claims 1 to 4, wherein the sub-platform for facilitating at least one participant interaction comprises one or more of an Advertising sub-platform, an Offer sub-platform, a Redemption sub-platform, a Social media sub-platform, and an Education sub-platform.

7. A method for adapting advertising material, the method comprising:
identifying characteristics of a participant;
applying a computer algorithm to the identifying characteristics;
selecting advertising material using the computer algorithm;
gathering additional information about a participant;
trending the identifying characteristics and the additional information;
adapting advertising content presented to a participant according to the trending.

8. The method of claim 7, where identifying characteristics of a participant, comprises:
gathering participant information from one or more of a touchscreen display, keyboard, a GPS device, a mobile application, and a visual recognition device.

9. The invention of any of claims 1 to 6 or claim 8, wherein identifying the characteristics comprises using a visual recognition device including a facial pattern recognition engine to identify at least one facial characteristic of the participant.

10. The invention of claim 9, wherein the facial pattern recognition engine analyses a digital image of a participant's face to determine the at least one facial characteristic of the participant.

11. The invention of claim 10, wherein the at least one facial characteristic comprises gender and/or age.

12. The invention of claim 10 or 11, wherein the facial pattern recognition engine calculates the characteristic using a plurality of algorithms, each algorithm assigning a score to the characteristic and the facial pattern recognition engine outputting an average of the scores.

13. The invention of claim 12, wherein the plurality of algorithms includes a linear discriminant analysis of a vector based matrix of an image of the participant.

14. The invention of claim 12 or 13, wherein the plurality of algorithms includes an elastic bunch graph matching algorithm.

15. A invention of distributing an offer for goods or services, the method comprising:
driving viral interactions with an integrated system;
gathering information about a participant from interactions with a plurality of participant access points;
aggregating the information about the participant in at least one database,
evaluating the information about the participant in the database; and
modifying an offer for goods or services according to the information.
